# EUROPEAN PATENT APPLICATION

(11) **EP 1 291 192 A1**
(43) Date of publication of application: **12.03.2003**
(21) Application number: 02256043.7
(22) Date of filing: 30.08.2002
(51) Int. Cl.: B41J 19/14, H04N 1/60

(54) **Color correction for bi-directional printing in inkjet printers**

(30) Priority: 07.09.2001 US 948809
(71) Applicant: Hewlett-Packard Company, Palo Alto, CA 94304 (US)
(72) Inventor: Serra, Josep-Maria, San Diego, CA 92122 (US); Murcia, Antoni, San Diego, CA 92127 (US); Borrell, Ramon, San Cugat del Valles 08190 (ES)
(74) Representative: Jackson, Richard Eric

(57) **Abstract**

In the course of the operation of a bi-directionally printing inkjet printer, travel of the printhead (100) in the left-to-right direction results in the ability to apply colored ink droplets onto a pixel location in one sequence. However, when the printhead moves right-to-left, the sequence by which the colors may be applied is reversed. Therefore, hue shift alters the appearance of a pixel depending on the direction of printhead movement at the time of printing. In one implementation, a system (400) and method (500) of color data translation includes a first color mapping look-up table (406) for left-to-right printhead travel and a second color mapping look-up table (408) for right-to-left printhead travel. Accordingly, greater control over print output is obtained. In particular, hue shift between swaths, wherein each swath is associated with printhead travel in a particular direction, are avoided.

## Description

### TECHNICAL FIELD

This disclosure relates to a system and method to modify color data to correct for hue shift―i.e. differences between print output resulting from left-to-right and right-to-left color printhead movement.

### BACKGROUND

In an inkjet-printing environment, bi-directional printing―i.e. printing during both directions of printhead travel―is common method for increasing throughput. Each pass of the printhead prints a swath of print output; accordingly, each swath is printed by the printhead while moving in a direction opposite to the direction of the previous swath.

In a color printing environment, it is typically the case that a printhead will include columns of cyan, magenta and yellow inkjet nozzles. Accordingly, in a given pixel location, a droplet of cyan ink may be printed on top of a droplet of magenta ink by the printhead moving in one direction. However, with the printhead moving in the opposite direction, a droplet of magenta ink would be printed on top of the droplet of cyan ink.

The difference between the appearance of a first color of ink on top a second color of ink, verses the appearance of the second color of ink on top of the first color of ink, is considered to be "hue shift." Hue shift tends to degrade print quality, due in part to the non-uniformity of any given color through out a document, and due in part to the variance of any given color from the desired color.

In an effort to prevent hue shift, single-directional and multi-pass printing may be employed. In this manner, the order of the application of different colors of ink droplets is consistent. However, the throughput of single-directional and multi-pass printing is much less than bi-directional printing. As a result, a design choice exists between elimination of hue shift and greater print output through put.

### SUMMARY

An implementation of a system and method for reduction of hue shift and for color correction of bi-directional printing in inkjet printers includes a color data mapping process that maps color data differently, based in part on the expected direction of the printhead at the time the print data is to be output. That is, the output data associated with print output corresponding to each pixel location is based in part on the direction that the printhead will be moving, i.e. left-to-right or right-to-left, when that pixel will be printed.

### BRIEF DESCRIPTION OF THE DRAWINGS

The same numbers are used throughout the drawings to reference like features and components.

Fig. 1, Prior Art, is an illustration of a color printhead, having three columns of nozzles, each column associated with a different color of ink, such as cyan, magenta and yellow.

Fig. 2, Prior Art, is a greatly expanded view of a 4-pixel by 4-pixel region within a printed document, illustrating print output having inaccuracies resulting from a failure to take into account the direction of printhead movement.

Fig. 3 shows bi-directionally corrected print output associated with a four-pixel by four-pixel region, wherein the hue shift has been corrected to reduce print output error.

Fig. 4 is a diagrammatic view of a first exemplary print system having a bi-directional color mapping look-up table, thereby allowing the color of a pixel to be mapped from 8-bit RGB data to 8-bit CMYK data, in part as a function of the predicted direction of the printhead travel as the pixel is printed.

Fig. 5 is a flow diagram illustrating a method by which the print system of Fig. 4 maps colors, in part as a function of the direction of printhead movement.

Fig. 6 is a diagrammatic view of a second exemplary print system having a bi-directional half-toning module, thereby allowing the color of a pixel to be mapped from 8-bit CMYK data to 1-bit CMYK data, in part as a function of the predicted direction of the printhead travel as the pixel is printed.

Fig. 7 is a flow diagram illustrating a method by which the print system of Fig. 6 maps colors in part as a function of the direction of printhead movement.

Fig. 8 is a diagrammatic view of a third exemplary print system having a bi-directional correction module, thereby allowing a 1-bit CMYK color data file to be mapped into a hue shift corrected 1-bit CMYK color data file, in part as a function of the predicted direction of the printhead travel as the pixel is printed.

Fig. 9 is a flow diagram illustrating a method by which the print system of Fig. 8 maps colors in part as a function of the direction of printhead movement.

Fig. 10 is a diagrammatic view of a fourth exemplary print system having a bi-directional hue shift correction module.

Fig. 11 is a flow diagram illustrating a method by which the print system of Fig. 10 maps colors in part as a function of the predicted direction of printhead movement.

### DETAILED DESCRIPTION

An implementation of a system and method for hue shift correction for bi-directional printing in inkjet printers includes a color data mapping process in which the output data associated with each pixel location is based in part on the predicted direction that the printhead will be moving, i.e. left-to-right or right-to-left, when that pixel will be printed.

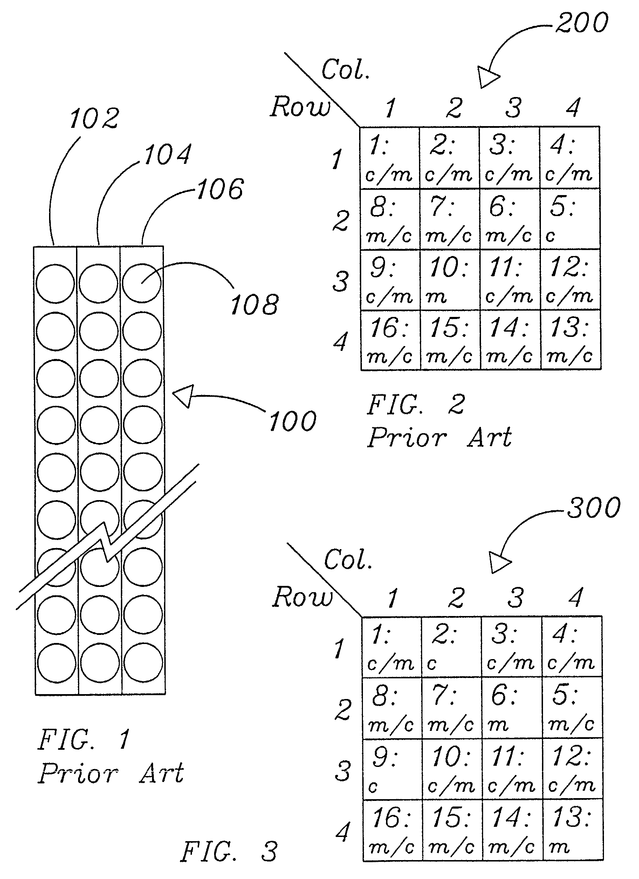

Fig. 1, Prior Art, shows a portion of a printhead 100 having three columns 102, 104, 106 of print nozzles 108. Each of the three columns. includes a plurality of nozzles associated with one color of ink, typically cyan, magenta and yellow. The columns are not staggered, i.e. one nozzle of each color is associated with each row. Accordingly, during left-to-right or right-to-left movement―i.e. scan direction movement of the nozzle―the nozzles contained within one color column prints first in one direction and last in the other direction. For example, cyan prints before magenta in one direction, and magenta prints before cyan in the other direction. As a result, if the printhead is moving in one direction cyan may print on top of magenta on one pixel. If the printhead is moving the other direction, magenta will print on top of cyan. Therefore, hue shift may cause the appearance of a pixel may be different, depending on the scan direction.

Fig. 2, Prior Art, shows conventional print output 200, including a four-pixel by four-pixel region within a printed document printed in a conventional manner. In the course of printing pixels 1 through 4, the scan direction is left-to-right, and cyan is printed on top of magenta (c/m). In pixels 5 through 8, the scan direction is right-to-left. In pixel 5, cyan is printed alone. In pixels 6 through 8, magenta is printed on top of cyan (m/c). Other pixels are printed as seen in the diagram. The overall result is that color varies noticeably from the desired hue.

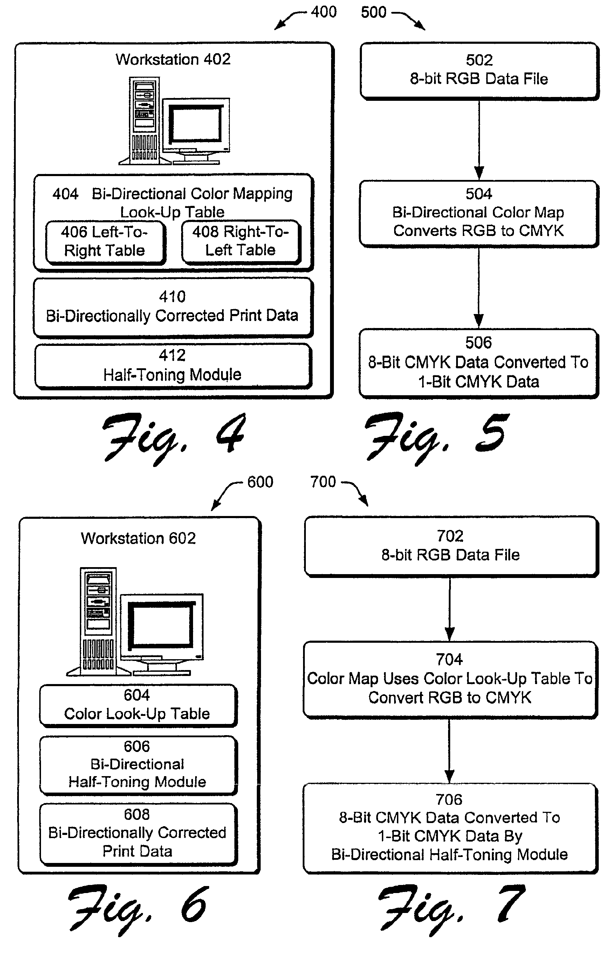

Fig. 3 shows bi-directionally corrected print output 300 associated with a four-pixel by four-pixel region similar to that seen in Fig. 2. However―purely by way of illustration―in Fig. 3 pixels 2, 5, 6, 9, 10 and 13 have been altered from the result seen in Fig. 2. These alterations were made to resist hue shift and improve the overall color output to better match the desired hue. The alterations were made, as will be seen in greater detail below, in response to knowledge of the scan direction of the printhead associated with the printing of each pixel, and in response to knowledge of the relative orientation of the color columns 102, 104, 106. By taking into account the scan direction, and therefore which color will be on top of which color for each pixel location, the bi-directionally corrected print data results in bi-directionally corrected print output.

Fig. 4 shows a first exemplary print system 400 having a bi-directional color mapping look-up table. The look-up table allows the color of each pixel to be mapped from an element of 8-bit RGB data to a first element of 8-bit CMYK data if the printhead will be moving in a first direction at the time the data is printed, or to a second element of 8-bit CMYK data if the printhead is moving in a second direction. Thus, one of the input parameters used in the mapping process is the predicted direction of the printhead travel as the pixel is printed. Depending on the direction of printhead travel and the construction of the printhead, the order in which it is possible to apply different colors of ink on a given pixel―in one pass of the printhead―is known. As a result, some variance will exist between the 8-bit CMYK colors that are available, depending on the direction of the printhead movement.

A workstation 402 or other computer includes a bi-directional color mapping look-up table 404. The bi-directional color look-up table converts 8-bit RGB color print data into bi-directionally corrected 8-bit CMYK color print data 410. During the color mapping process, the desired RGB color is mapped to a CMYK color that is approximately the same. However, the available CMYK colors contained within the color space depend on the direction of the printhead travel with respect to a given pixel. This is true, for example, because in one direction of printhead travel cyan must be printed on top of magenta, and in the other direction of travel magenta must be printed on top of cyan. As a result, the version of the bi-directional color map of Fig. 4 includes two look-up tables. In particular, a left-to-right table 406 and a right-to-left table 408 are provided. The left-to-right look-up table 406 provides more accurate color mapping when the printhead is moving in the left-to-right direction than conventional color look-up tables. The left-to-right table provides the color options available within the constraints associated with left-to-right printhead travel, such as the order in which different colors may be applied to a given pixel location. The right-to-left color look-up 408 table similarly provides color-mapping ability that exceeds conventional color mapping tables because the output colors to which input colors may be mapped are optimized given the constraining color order by which ink colors may be applied to a given pixel, in view of the printhead travel direction.

By using the left-to-right table 406 and right-to-left table 408 within the bi-directional color mapping look-up table 404, bi-directionally corrected print data 410 is produced. The bi-directionally corrected print data is converted into 1-bit CMYK print data by a halftoning module 412. The output of the halftoning module is then sent to a printer for creation of print output.

Fig. 5 shows a flow diagram illustrating an exemplary method 500 by which 8-bit RGB color data is converted to bi-directionally corrected 1-bit CMYK color data. During a mapping process by which RGB color date is mapped to CMYK color data, left-to-right and right-to-left color mapping tables recognize that CMYK color is dependent on the printhead direction, and allow selection of the appropriate CMYK color from the appropriate color table.

At block 502, an 8-bit RGB data file is obtained. Such a data file is suitable for viewing on a typical CRT monitor, and could be obtained from a website or similar content source. While an 8-bit file is indicated, a file having a color depth other than 8-bit, such as 16-bit, could similarly be used.

At block 504, a bi-directional color mapping look-up table 404 translates each pixel of RGB color data into 8-bit CMYK color data. By determining whether a given pixel is within a swath that is printed during movement of the printhead from left-to-right or right-to-left, appropriate use is made of the left-to-right or right-to-left color mapping look-up table 406, 408 contained within the bi-directional color map 404. As a result, the hue shifts between adjacent swaths printed by left-to-right and right-to-left movement of the printhead are reduced.

At block 506, the bi-directionally corrected 8-bit CMYK print data is converted into 1-bit CMYK print data, typically by a halftoning process. The 1-bit CMYK data is then sent to a printer.

Fig. 6 shows a second exemplary print system 600 having a bi-directional halftoning module, wherein 8-bit CMYK print data is converted into 1-bit CMYK print data. The halftoning process takes into account the direction of printhead movement associated with each pixel. As a result, different 1-bit CMYK color data may result, depending on the direction or printhead travel.

A workstation 602 or other computer includes a color look-up table 604 for mapping 8-bit RGB color data to 8-bit CMYK color data. The 8-bit CMYK color data is then halftoned to 1-bit CMYK color data by a bi-directional halftoning module 606, thereby producing bi-directionally corrected print data 608. The bi-directional halftoning module selects an appropriate output response for each pixel on each color plane based in part on the direction of the printhead travel associated with that pixel.

Fig. 7 shows a flow diagram illustrating an exemplary method 700 by which 8-bit RGB color data is converted to bi-directionally corrected 1-bit CMYK color data. During a mapping process by which 8-bit CMYK color data is mapped to bi-directionally corrected 1-bit CMYK color data, a bi-directional halftoning algorithm selects values for each 1-bit color plane that are appropriate with respect to the expected appearance of the print output in view of the printhead direction.

At block 702, an 8-bit RGB color data file is obtained.

At block 704, the 8-bit RGB color data file is converted to an 8-bit CMYK color data file.

At block 706, the 8-bit CMYK color data is halftoned to 1-bit CMYK color data. The bi-directional halftoning module 606 compensates for the fact that the colors available for each pixel are somewhat different, depending on the direction of the printhead. Accordingly, the bi-directionally corrected print data 608 is produced.

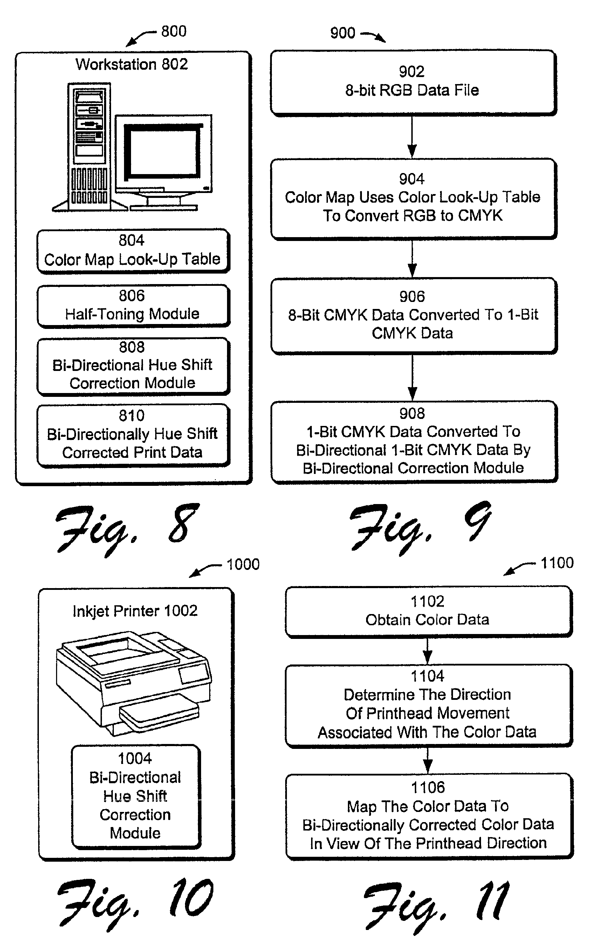

Fig. 8 shows a third exemplary print system 800 having a bi-directional correction module. Using the bi-directional correction module, color print data may be mapped or otherwise converted to bi-directionally hue shift corrected color print data. Print output associated with the bi-directionally hue shift corrected print data more accurately represents the original output intent.

A workstation 802 or other computer includes a color map look-up table 804 for mapping 8-bit RGB color data to 8-bit CMYK color data. The 8-bit CMYK color data is then halftoned to 1-bit CMYK color data by a halftoning module 806, thereby producing 1-bit CMYK color data.

The bi-directional correction module 808 translates the 1-bit CMYK color data into bi-directionally corrected 1-bit CMYK color data 810. Alternatively, the bi-directional correction module could translate 8-bit RGB into bi-directionally hue shift corrected 8-bit RGB, or translate 8-bit CMYK into bi-directionally hue shift corrected 8-bit CMYK, or any other color data file into a bi-directionally hue shift corrected color file.

Fig. 9 shows a flow diagram illustrating an exemplary method 900 by which 1-bit CMYK color data is mapped or otherwise converted to bi-directionally hue shift corrected 1-bit CMYK color data. The mapping produces more accurate and aesthetic print output. In particular, hue shift resulting from differences between left-to-right and right-to-left print swaths―associated with similarly directed printhead movement―is reduced or eliminated.

At block 902, an 8-bit RGB data file is obtained.

At block 904, a color map uses color look-up tables to convert the 8-bit RGB data into 8-bit CMYK data.

At block 906, the 8-bit CMYK data is converted to 1-bit CMYK data.

At block 908, the bi-directional correction module 806 of the print system 800 determines the direction of printhead movement and converts 1-bit CMYK data into bi-directionally hue shift corrected 1-bit CMYK data as a function of the direction of printhead movement.

Fig. 10 shows a third exemplary print system 1000. In inkjet printer 1002 includes a bi-directional hue shift correction module 1004. Using the bi-directional hue shift correction module, color print data arriving at the printer from a print server, workstation or other source is mapped or otherwise converted to bi-directionally hue shift corrected color print data.

Fig. 11 shows a flow diagram illustrating an exemplary method 1100 by which the print system 1000 operates. An element of color data is first obtained. The direction of printhead movement at the time the element of data will be printed is then determined, and the element of color data is mapped to color plane data in view of the direction of printhead movement. The mapping process is typically performed using two color look-up table associated with the two directions of printhead movement.

At block 1102, an element of color data is obtained. The color data may be in any form, such as RGB, CMYK, 8-bit, 16-bit or other format. In the print system 1000 of Fig. 10, the print data is in the form of device ready bits, corresponding to the.color planes, cyan, magenta, yellow and black.

At block 1104, the direction of printhead movement over the location on which the element of color data will be printed is determined.

At block 1106, the element of color data is mapped into an element of bi-directionally hue shift corrected color data, as a function of the direction of printhead movement. Thus, the data associated with one or more pixels within one or more color planes may be altered, in view of the expected appearance of that data when printed by the printhead moving in the determined direction. This may include changing data within one or more color planes, and where possible, may include changing the amount of one or more colors of ink applied to any pixel.

In conclusion, a system and method for color correction for bi-directional printing in inkjet printers has been disclosed. An exemplary system and method includes a color data mapping process in which the output data associated with each pixel location is based in part on the direction that the printhead will be moving, i.e. left-to-right or right-to-left, when that pixel will be printed. Accordingly, the print output can be mapped to reflect the direction of the printhead and the sequence by which different colors of ink are applied to the media. As a result, one-direction and multi-pass printing are not needed.

Although the disclosure has been described in language specific to structural features and/or methodological steps, it is to be understood that the appended claims are not limited to the specific features or steps described. Rather, the specific features and steps are exemplary forms of implementing this disclosure. In particular, while RGB and CMYK files have been discussed, other file formats could be used. Similarly, while 16-bit, 8-bit and 1-bit color depth has been discussed, information in other forms could alternatively be used. And, while four locations where, within a print data pipeline, bi-directionally hue shift correcting color mapping could be applied, other locations would be within the scope of the instant disclosure.

## Claims

1. A print system (400), comprising:
a first color map (406) to map data that will be output when a printhead (100) is moving in a first direction; and
a second color map (408) to map data that will be output when the printhead (100) is moving in a second direction.

2. The print system of claim 1, wherein the first and second color maps (406, 408) input data in an RGB format and output data in a CMYK format.

3. The print system of claim 1, wherein the first and second color maps (406, 408) input and output data in a CMYK format.

4. A bi-directional print system, comprising:
a left-to-right color mapping look-up table to map (406) data that will be output when a printhead (100) is moving in a left-to-right direction; and
a right-to-left color mapping look-up table to map (408) data that will be output when the printhead (100) is moving in a right-to-left direction.

5. The bi-directional print system of claim 4, wherein the first and second color maps (406, 408) input data in an RGB format and output data in a CMYK format (504).

6. The bi-directional print system of claim 4, wherein the first and second color maps (406, 408) input and output data in a CMYK format (706).

7. A method of bi-directional printing (500), comprising:
using a first mapping process (406) for color data associated with pixel locations associated with a first direction of printhead movement; and
using a second mapping process (408) for color data associated with pixel locations associated with a second direction of printhead (100) movement.

8. The method (500) of claim 7 wherein using first and second mapping processes comprises referencing first and second color look-up tables (406, 408), respectively.

9. A method of bi-directional printing (1100), comprising:
obtaining color print data;
determining (1104)a direction of printhead movement associated with a location on which the color print data will be output; and
mapping (1106) the color print data to bi-directionally corrected color print data as a function of the direction of printhead movement.

10. The method (1100) of claim 9 wherein mapping comprises referencing first and second color look-up tables (1004), associated with first and second directions of printhead movement, respectively.
